# EUROPEAN PATENT SPECIFICATION

(11) **EP 3 173 366 B1**
(45) Date of publication and mention of the grant of the patent: **04.09.2019**
(21) Application number: 16275165.5
(22) Date of filing: 16.11.2016
(51) Int. Cl.: H04L 29/08, B66B 5/00, G06F 8/65, G05B 19/042, B66B 1/34

(54) **AUTOMATED PASSENGER CONVEYING SYSTEM MANIPULATION VIA AN AUTOMATED REMOTE ACTIVATION AND VALIDATION OF CONTROLLER SOFTWARE**
AUTOMATISIERTE PERSONENBEFÖRDERUNGSSYSTEMMANIPULATION ÜBER AUTOMATISIERTE FERNAKTIVIERUNG UND -VALIDIERUNG DER STEUERGERÄTESOFTWARE
MANIPULATION DE SYSTÈME AUTOMATISÉ DE TRANSPORT DE PASSAGERS PAR VALIDATION ET ACTIVATION À DISTANCE AUTOMATISÉES D'UN LOGICIEL DE COMMANDE

(30) Priority: 25.11.2015 IN 3841DE2015
(43) Date of publication of application: 31.05.2017
(73) Proprietor: Otis Elevator Company, Farmington CT 06032 (US)
(72) Inventor: Gandhi, Abhijeet Ghanshyam, 411051 Maharashtra (IN); Hnida, Martin Georg Walter, D-13507 Berlin (DE); French, Micky, Romsey, hampshire SO51 0HR (GB); Koorella, Venkata Anantha Naga Seshu, Pendle Hill, New South Wales 2145 (AU)
(74) Representative: Dehns

(56) References cited:
- WO-A1-00/51929
- US-A1- 2009 077 270
- US-A1- 2009 108 998
- US-A1- 2013 205 288

## Description

### BACKGROUND

The disclosure relates generally to an automated passenger conveying system manipulation via an automated remote activation and validation of controller software.

Contemporary procedures for managing software utilized by an elevator system are limited to programming using a manual process where a mechanic must make an onsite visit. Once onsite, the mechanic powers down an elevator, programs new software, starts up the elevator, checks the new software, and returns the elevator back to service. The manual process is labor intensive and can take an extremely long time to perform per elevator or the elevator system (e.g., approximately 45 minutes per elevator). In this way, contemporary procedures for managing software utilized by the elevator systems are costly with respect to manpower and elevator downtime.

WO 00/51929 describes an electronic safety system for elevators in which a software update is performed manually on site by downloading from a maintenance PC.

### SUMMARY

According to one embodiment, a method for automatic updating of a first controller application in a component of an automated passenger conveying device comprising disabling the automated passenger conveying device from providing service; performing a switchover from the first controller application to a second controller application; performing a post-switchover inspection of the second controller application that determines whether the automated passenger conveying device works properly while the second controller application is active; and enabling the automated passenger conveying device to provide the service when the post-switchover inspection of the second controller application determines that the automated passenger conveying device works properly.

The method further comprises downloading the second controller application in response to a software compatibility check and scheduling the switchover in response to the downloading of the second controller application.

According to another embodiment or any of the method embodiments above, the method can further comprise programming parameters to enable features corresponding to the second controller application when the second application is a new controller application for the component.

According to another embodiment or any of the method embodiments above, the automated passenger conveying device can be an elevator, and the post-switchover inspection can include driving the elevator to a sequence of floors to determined safe operation.

According to another embodiment or any of the method embodiments above, the method can further comprise reverting back to the first controller application when the post-switchover inspection of the second controller application determines that the automated passenger conveying device does not work properly.

According to another embodiment or any of the method embodiments above, the method can further comprise sending to a network monitoring system a message indicating that the switchover was completed when the post-switchover inspection of the second controller application determines that the automated passenger conveying device works properly.

According to another embodiment or any of the method embodiments above, the method can further comprise sending to a notification to a user indicating that the switchover was not completed when the post-switchover inspection of the second controller application determines that the automated passenger conveying device does not works properly.

According to another embodiment or any of the method embodiments above, the automated passenger conveying device can be one of a plurality of automated passenger conveying devices within an automated passenger conveying system, each of the plurality of automated passenger conveying devices comprising a corresponding component.

According to another embodiment or any of the method embodiments above, the automated passenger conveying device can be an escalator or a walkway.

According to another embodiment or a system embodiment, an automated passenger conveying system comprises an automated passenger conveying device and is configured to perform an automatic update of a first controller application in a component of the automated passenger conveying device by disabling the automated passenger conveying device from providing service; performing a switchover from the first controller application to a second controller application; performing a post-switchover inspection of the second controller application that determines whether the automated passenger conveying device works properly while the second controller application is active; and enabling the automated passenger conveying device to provide the service when the post-switchover inspection of the second controller application determines that the automated passenger conveying device works properly.

The system further comprises downloading the second controller application in response to a software compatibility check and scheduling the switchover in response to the downloading of the second controller application.

According to another embodiment or any of the system embodiments above, the system can further comprise programming parameters to enable features corresponding to the second controller application when the second application is a new controller application for the component.

According to another embodiment or any of the system embodiments above, the automated passenger conveying device can be an elevator, and the post-switchover inspection can include driving the elevator to a sequence of floors to determined safe operation.

According to another embodiment or any of the system embodiments above, the system can further comprise reverting back to the first controller application when the post-switchover inspection of the second controller application determines that the automated passenger conveying device does not work properly.

According to another embodiment or any of the system embodiments above, the system can further comprise to a network monitoring system a message indicating that the switchover was completed when the post-switchover inspection of the second controller application determines that the automated passenger conveying device works properly.

According to another embodiment or any of the system embodiments above, the system can further comprise sending to a notification to a user indicating that the switchover was not completed when the post-switchover inspection of the second controller application determines that the automated passenger conveying device does not work properly

Additional features and advantages are realized through the techniques of the present disclosure. Other embodiments and aspects of the disclosure are described in detail herein and are considered a part of the claims. For a better understanding of the disclosure with the advantages and the features, refer to the description and to the drawings.

### BRIEF DESCRIPTION OF THE DRAWINGS

The forgoing and other features, and advantages of the disclosure are apparent from the following detailed description taken in conjunction with the accompanying drawings in which:
FIG. 1 illustrates an example of a schematic of an intelligent building system according to one embodiment;
FIG. 2 illustrates a computing device schematic of an intelligent building system according to one embodiment; and
FIG. 3 illustrates a process flow of executed by an intelligent building system according to one embodiment.

### DETAILED DESCRIPTION

In general, embodiments of the present disclosure disclosed herein may include an intelligent building system, method, and/or computer program product (herein "intelligent environment") that preforms automated remote activation and validation of controller software. In operation, the intelligent environment utilizes a remote system to automatically initiate software checks of an automated passenger conveying system, supply updated or new software as needed to the automated passenger conveying system, and coordinate switchovers from current software to the updated or new software while safely disabling and enabling the automated passenger conveying system. Note that the automated passenger conveying system can include elevators, escalators, and/or moving walkways.

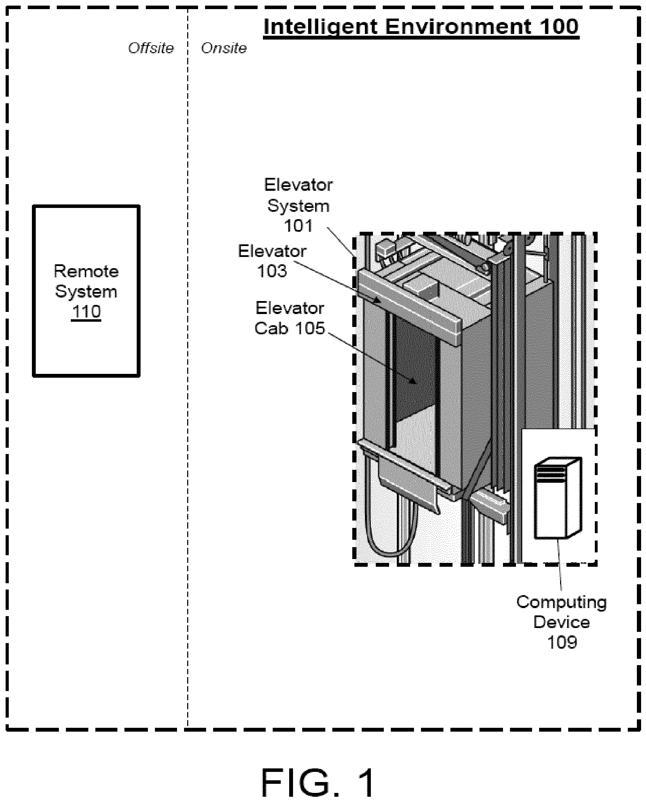

Referring now to FIG. 1, an example schematic of an intelligent environment 100 is shown. The intelligent environment100 and elements therein may take many different forms and include multiple and/or alternate components and facilities. The intelligent environment 100 is only one example of an intelligent environment and is not intended to suggest any limitation as to the scope of use or operability of embodiments described herein (indeed additional or alternative components and/or implementations may be used).

The intelligent environment100 includes an elevator system 101, which is an example of an automated passenger conveying system. The elevator system 101 comprises at least an elevator 103 that includes an elevator cab 105, and a computing device 109.The elevator 103 is representative of one or more elevators, one or more escalators, and/or one or more moving walkways. The elevator system 100 and components therein can be considered onsite.

The intelligent environment 100 includes a remote system 110, which can comprise at least a remote device, a network monitoring system, and a loader master. The remote system 110 can communicate with a plurality of elevator systems 101, such that multiple elevator systems can receive automated remote activation and validation of controller software. The remote system 110 and components therein can be considered offsite.

The intelligent environment 100 may implement operations and/or communicate signals between the elevator system 101, remote system 110, and elements therein (e.g., a display, an interface, a detector, and other systems and sub-systems that assist users of the elevator 103). Examples of operations and/or signals may include performing automated remote activation (e.g., a remote switchover, activation of new controller software), remote download (e.g., procedure to download new controller software), validating controller software, generating an elevator call, canceling an elevator call, providing notifications to the users, etc. Further, the intelligent environment 100 can utilize the same protocols, and even hardware, for components therein as are used by a user and a user device to leverage cost and implementation benefits. In an embodiment, the intelligent environment 100 can utilize a loader protocol configured to support remote download from the remote system 110 to the elevator system 101 with respect to first and second load libraries.

The elevator system 101 can comprise electromechanical arrangements (e.g., a controller and/or computing device, such as computing device 109, that communicates with at least one motor) that control speed, position, and door operation of an elevator 103 (e.g., a bank of elevators). The elevator cab 105 has a finite capacity to hold occupants, which include objects and people, based on the dimensions of the elevator.

The computing device 109 of the elevator system 101 can be any controller, component, and/or sub-systems that utilize a controller application (e.g., software). In this way, the intelligent environment 100 can facilitate communication between the remote system 110 and the elevator system 100 to update software of that controller, component, and/or subsystem. Examples of these controllers, components, and subsystems include but are not limited to dispatch controller, display controller, drive controller, door controller, temperature controller, etc. For instance, the computing device can be a GECB configured to control and monitor (or communicate with other systems and sub-systems through any network communication technologies that can control and monitor) the elevator 103 and the elevator cab 105, along with a detector, such that the elevator system 101 may operate the elevator 103 as the remote system 110 interacts with the computing device 109 (e.g., perform automated remote activation and validation of controller software). Examples of communication technologies include electromagnetic, e.g., radio frequency ("RF"), magnetic (near field communication, "NFC"), short wave radio, proximity systems, Bluetooth Low Energy (BLE) beacons, etc.

The remote system 110 may implement operations and/or communicate signals between elements therein (e.g., remote devices, network monitoring systems, and/or loader libraries) and/or the elevator system 101. Examples of operations and/or communication signals may include initiating an automated remote activation and validation of controller software. The remote system 110 may comprise hardware and/or software that are similar to the computing device 109 described above. For instance, the remote system 110 can comprise a controller download utility that executes on a remote device to manage and perform related download tasks. Controller download utility can also provide/generate graphic user interfaces to communicate/convert messages/information.

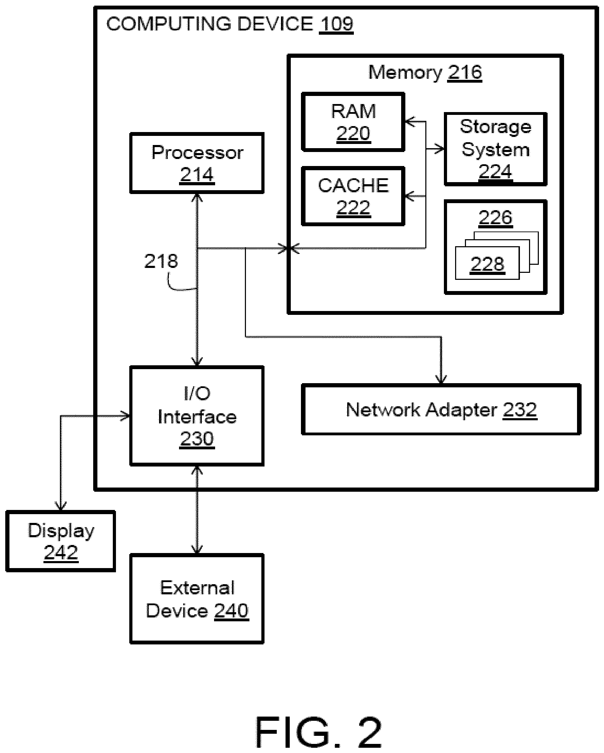

Referring now to FIG. 2, an example schematic of a computing device 109 (or remote system 110) of an intelligent environment 100 is shown. The computing device 109 is only one example of a suitable computing node and is not intended to suggest any limitation as to the scope of use or operability of embodiments described herein (indeed additional or alternative components and/or implementations may be used). That is, the computing device 109 and elements therein may take many different forms and include multiple and/or alternate components and facilities.

In an embodiment, the computing device 109 is a global control system (GCS) that includes a GCS controller board (also known as a global elevator control board (GECB)), which further executes a controller application (e.g., application software). The controller application, in general, can schedule switchovers on a per message basis and can cause the GCS to take the elevator 103 out of service (e.g., disable the elevator for user operation) when performing a switchover to a new application. Once the new application is running, the controller application can communicate with the remote system 110 contacts to remotely enter new software parameters. The controller application can also automatically perform post-switchover inspection, return the elevator 103 back to service after a successful post-switchover inspection, and generate notifications (e.g., email or text messages) describing the operation carried out.

Further, the computing device 109 may be any and/or employ any number and combination of computing devices and networks utilizing various communication technologies, as described herein. Regardless, the computing device 109 is capable of being implemented and/or performing any of the operations set forth herein.

The computing device 109 can be operational with numerous other general-purpose or special-purpose computing system environments or configurations. Systems and/or computing devices, such as the computing device 109, may employ any of a number of computer operating systems. Examples of computing systems, environments, and/or configurations that may be suitable for use with the computing device 109 include, but are not limited to, personal computer systems, server computer systems, thin clients, thick clients, handheld or laptop devices, multiprocessor systems, microprocessor-based systems, set top boxes, programmable consumer electronics, network PCs, minicomputer systems, computer workstations, servers, desktops, notebooks, network devices, mainframe computer systems, and distributed cloud computing environments that include any of the above systems or devices, and the like.

The computing device 109 may be described in the general context of computer system executable instructions, such as program modules (e.g., the control application), being executed by a computer system. Generally, program modules may include routines, programs, objects, components, logic, data structures, and so on that perform particular tasks or implement particular abstract data types. The computing device 109 may be practiced in distributed cloud computing environments where tasks are performed by remote processing devices that are linked through a communications network. In a distributed cloud computing environment, program modules may be located in both local and remote computer system storage media including memory storage devices.

As shown in FIG. 2, the computing device 109 is in the form of a general-purpose computing device that is improved upon by the operation and functionality of the embodiments described herein. The components of the computing device 109 may include, but are not limited to, one or more processors or processing units (e.g., processor 214), a memory 216, and a bus (or communication channel) 218 which may take the form of a bus, wired or wireless network, or other forms, that couples various system components including to the processor 214 and the system memory 216. The computing device 109 also typically includes a variety of computer system readable media. Such media may be any available media that is accessible by the computing device 109, and it includes both volatile and non-volatile media, removable and non-removable media.

The processor 214 may receive computer readable program instructions from the memory 216 and execute these instructions, thereby performing one or more processes defined above. The processor 214 may include any processing hardware, software, or combination of hardware and software utilized by the computing device 214 that carries out the computer readable program instructions by performing arithmetical, logical, and/or input/output operations. Examples of the processor 214 include, but are not limited to an arithmetic logic unit, which performs arithmetic and logical operations; a control unit, which extracts, decodes, and executes instructions from a memory; and an array unit, which utilizes multiple parallel computing elements.

The memory 216 may include a tangible device that retains and stores computer readable program instructions, as provided by the intelligent building systems 100, for use by the processor 214 of the computing device 109. The memory 216 can include computer system readable media in the form of volatile memory, such as random access memory 220, cache memory 222, and/or the storage system 224. For example, the memory 216 can store for the GECB multiple controller applications, such a first application or active application is presently being executed and subsequent or other version applications are awaiting switchovers. The first application can be stored in an active or accessible portion of the memory 216, while the subsequent applications can be stored in an inactive or inaccessible portion.

By way of example only, the storage system 224 can be provided for reading from and writing to a non-removable, non-volatile magnetic media (not shown and typically called a "hard drive", either mechanical or solid-state). Although not shown, a magnetic disk drive for reading from and writing to a removable, non-volatile magnetic disk (e.g., a "floppy disk"), and an optical disk drive for reading from or writing to a removable, non-volatile optical disk such as a CD-ROM, DVD-ROM or other optical media can be provided. In such instances, each can be connected to the bus 218 by one or more data media interfaces. As will be further depicted and described below, the memory 216 may include at least one program product having a set (e.g., at least one) of program modules that are configured to carry out the operations of embodiments. The storage system 224 (and/or memory 216) may include a database, data repository or other data store and may include various kinds of mechanisms for storing, accessing, and retrieving various kinds of data, including a hierarchical database, a set of files in a file system, an application database in a proprietary format, a relational database management system (RDBMS), etc. The storage system 224 may generally be included within the computing device 109, as illustrated, employing a computer operating system such as one of those mentioned above, and is accessed via a network in any one or more of a variety of manners.

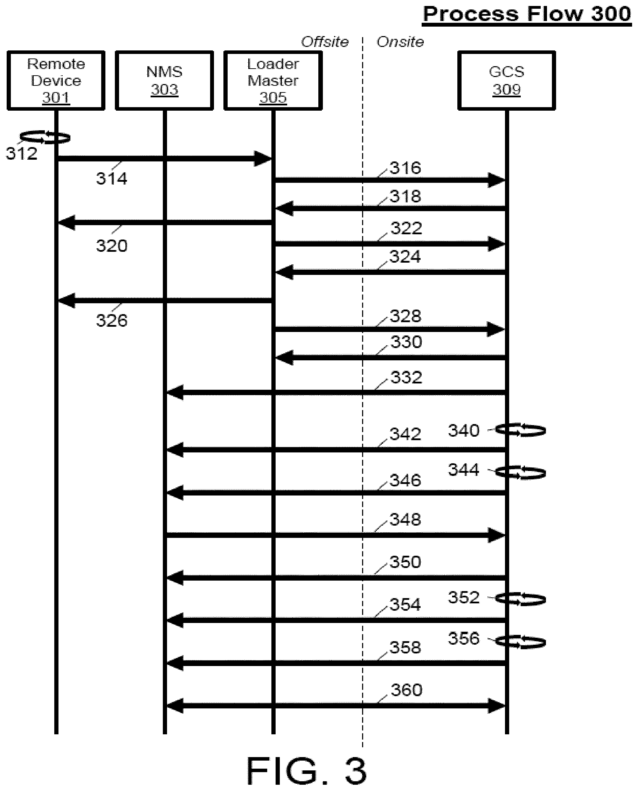

Program/utility 226, having a set (at least one) of program modules 228, may be stored in memory 216 by way of example, and not limitation, as well as an operating system, one or more application programs, other program modules, and program data. Each of the operating system, one or more application programs, other program modules, and program data or some combination thereof, may include an implementation of a networking environment. Program modules 228 generally carry out the operations and/or methodologies of embodiments as described herein (e.g., FIG. 3 and the process flow 300).

The bus 218 represents one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus.

The computing device 109 may also communicate via an input/output (I/O) interface 230 and/or via a network adapter 232. The I/O interface 230 and/or the network adapter 232 may include a physical and/or virtual mechanism utilized by the computing device 109 to communicate between elements internal and/or external to the computing device 109. For example, the I/O interface 230 may communicate with one or more external devices 240, such as a keyboard, a pointing device, a display 242, etc.; one or more devices that enable a user to interact with the computing device 109; and/or any devices (e.g., network card, modem, etc.) that enable the computing device 109 to communicate with one or more other computing devices. Further, the computing device 109 can communicate with one or more networks such as a local area network (LAN), a general wide area network (WAN), and/or a public network (e.g., the Internet) via network adapter 232. Thus, I/O interface 230 and/or the network adapter 232 may be configured to receive or send signals or data within or for the computing device 109. As depicted, the I/O interfaces 230 and the network adapter 232 communicates with the other components of the computing device 109 via the bus 218. It should be understood that although not shown, other hardware and/or software components could be used in conjunction with the computing device 109. Examples, include, but are not limited to: microcode, device drivers, redundant processing units, external disk drive arrays, RAID systems, tape drives, and data archival storage systems, etc.

While single items are illustrated for the intelligent environment 100 (and other items) by the FIGS., these representations are not intended to be limiting and thus, any items may represent a plurality of items. In general, computing devices may include a processor (e.g., a processor 214 of FIG. 2) and a computer readable storage medium (e.g., a memory 216 of FIG. 2), where the processor receives computer readable program instructions, e.g., from the computer readable storage medium, and executes these instructions, thereby performing one or more processes, including one or more of the processes described herein.

Operations of the intelligent environment 100 will now be described with respect to FIG. 3 and the process flow 300 therein. In general, the process flow 300 illustrates remote activation of new software and post-switchover inspection operations performed between offsite devices (e.g., a remote device 301, a network monitoring system (NMS) 303, and loader master 305) and onsite devices (e.g., GCS 309). The offsite devices can correspond to the remote system 110, while the onsite devices can correspond to the elevator system 101.

The remote device 301 can be a computing device, as described above, and is configured to initiate remote downloads, remote switchovers, and validating controller software. The network monitoring system 303 can be a computing device, as described above, and is configured to monitor remote downloads, remote switchovers, and controller software. The NMS 303 can store messages as configuration changes for the particular software releases. The NMS 303 can send these messages for programming parameters during a switchover. Since the call will be initiated by controller application, the NMS 303 can store the messages based on unit address or application revision.

The loader master 305 can be a computing device, as described above, and is configured to execute and manage libraries as part of controller download utility to support loader protocols and provide capabilities to perform remote downloads and switchovers. The GCS 309 executes a controller application, which may include executing and managing a local library.

Process flow 300 begins at arrow 312, where the remote device 301 performs compatibility checks for software compatibility with the GCS 309. At arrow 314, the remote device 301 initiates a remote application download(if the compatibility checks pass). In turn, at arrow 316, the loader master 305 sends a download message along with application software to the GCS 309. For example, the loader master 305 may utilize a first library to supply a latest version of a controller application to a second library of the GCS 309. At arrow 318, the GCS 309 sends a message to the loader master 305, where the message indicates that the download is complete. In response to this message, at arrow 320, the loader master 305 provides a signal to the remote device 301 that can trigger a visual indication that the download is complete.

At arrow 322, the loader master 305 sends a read configuration message to the GCS 309, which is sent when the latest version of the controller application is a new application. That is, the remote device 301 uploads configuration data corresponding to additional parameters that need to be set for activating new application. In response, at arrow 324, the GCS 309 sends a message to the loader master 305, where the message indicates that the read configuration is complete. In response to this message, at arrow 326, the loader master 305 provides a signal to the remote device 301 that can trigger a visual indication that the read configuration is complete.

At arrow 328, the loader master 305 sends a message to the GCS 309 to schedule a switchover. Scheduling the switchover can include determining a time of day when the elevator system 101 is least active and slotting the switchover for that time (e.g., at a time when a building is closed). At arrow 330, the loader master 305 receives a response message from the GCS 309 that the switchover is scheduled. In turn, at arrow 332, a presently running application sends a message to the NMS 303 that indicates that download is complete.

To perform the switchover, the presently running controller application of the GCS 309 performs an operation to take the elevator out of service (arrow 340). At arrow 342, the presently running controller application of the GCS 309 sends a confirmation message to the NMS 303 that the elevator has been taken out of service.

At arrow 344, the presently running controller application of the GCS 309 performs switchover. To perform the switchover, the GCS 309 activates the latest version of the controller application. At arrow 346, the latest version of the controller application sends a message to the NMS 303 indicating that switchover was completed.

At arrow 348, the NMS 303 programs new parameters as required for the latest version of the controller application. That is, particularly controller application releases may require setting of parameters for enabling of new features. The NMS 303 shall message the GCS 309 to configure these parameters. At arrow 350, the latest version of the controller application sends a message to the NMS 303 confirming that the new parameters are set.

At arrow 352, the now activated application performs post-switchover inspection. During the post-switchover inspection, the now activated application determines whether the elevator system 101 is safe to operate, works properly (e.g., performs elevator operations without error and with respect to moving to a designated floor, opening and closing doors, stopping at a correct level per floor, etc.). In an embodiment, the post-switchover inspection can include driving the elevator 103 to a sequence of floors and operations. For instance, a call is sent to the elevator system 101 that causes the elevator 103 to move between floors and if the elevator 103 successfully moves between floors according to the call then the post-switchover inspection is determined to be complete.

If during the now activated application determines whether the elevator system 101 is not safe to operate and/or does not work properly, then the elevator system 101 can revert back to the presently running controller application (which is now the previously running controller application) of the GCS 309. Otherwise, at arrow 354, the now activated application sends post-switchover inspection complete message to the NMS 303.At arrow 356, the elevator is returned/brought back into service by the GCS 309. Further, at arrow 358, an email notification is generated for the remote expert and customer, and, at arrow 360, information is updated across the system. Note that notifications can be generated when a post-switchover inspection fails, such that the remote expect can coordinate service of the elevator system 101 by a technician.

In view of the above process flow 300, the intelligent environment 100 can initiate software checks, supply updated or new software, and/or coordinate switchovers of a plurality of elevators 103 of an elevator system 101, where each elevator 103 can be sequentially coordinated or coordinated in parallel. In an embodiment, the software checks and software supply can be performed in a batch to all elevators 103 and all elevators systems 101 that require updated software, such that a GECB of each elevator 103 downloads the updated software in the background and schedules the switchover once the download is complete. Each switchover in turn can be coordinated by the remote system 110, such that one or more elevators 103 are taken out of service at a time per building.

Technical effects and benefits include eliminating the need for a mechanic to perform a site visit for installation and activation of new software thereby allowing use of existing manpower more efficiently. The technical effects and benefits also include performing automated checks to insure correctness of the newly installed software before putting elevators back into service, faster deployment of new features on existing elevator portfolios, and deploying software downloads without scheduled on-site service visits (thereby aiding in rapid repair of customer issues).

The present disclosure may be a system, a method, and/or a computer program product. The computer program product may include a computer readable storage medium (or media) having computer readable program instructions thereon for causing a processor to carry out aspects of the present disclosure. The computer readable storage medium can be a tangible device that can retain and store instructions for use by an instruction execution device.

The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, to perform aspects of the present disclosure.

Aspects of the present disclosure are described herein with reference to flowchart illustrations and/or block diagrams of methods, apparatus (systems), and computer program products according to embodiments. It will be understood that each block of the flowchart illustrations and/or block diagrams, and combinations of blocks in the flowchart illustrations and/or block diagrams, can be implemented by computer readable program instructions. In this way, the flowchart and block diagrams in the FIGS. illustrate the architecture, operability, and operation of possible implementations of systems, methods, and computer program products according to various embodiments. Further, each block in the flowchart or block diagrams may represent a module, segment, or portion of instructions, which comprises one or more executable instructions for implementing the specified logical operation(s). In some alternative implementations, the operations noted in the block may occur out of the order noted in the FIGS. For example, two blocks shown in succession may, in fact, be executed substantially concurrently, or the blocks may sometimes be executed in the reverse order, depending upon the operability involved. It will also be noted that each block of the block diagrams and/or flowchart illustration, and combinations of blocks in the block diagrams and/or flowchart illustration, can be implemented by special purpose hardware-based systems that perform the specified operations or acts or carry out combinations of special purpose hardware and computer instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the operations/acts specified in the flowchart and/or block diagram block or blocks. These computer readable program instructions may also be stored in a computer readable storage medium that can direct a computer, a programmable data processing apparatus, and/or other devices to operate in a particular manner, such that the computer readable storage medium having instructions stored therein comprises an article of manufacture including instructions which implement aspects of the operation/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the operations /acts specified in the flowchart and/or block diagram block or blocks.

## Claims

1. A method for automatic updating of a first controller application in a component (109) of an automated passenger conveying device (101), comprising:
downloading a second controller application in response to a software compatibility check (312);
**characterised by**:
scheduling a switchover (344) in response to the downloading of the second controller application.
disabling the automated passenger conveying device (101) from providing service;
performing the switchover (344) from the first controller application to the second controller application;
performing a post-switchover inspection (352) of the second controller application that determines whether the automated passenger conveying device (101) works properly while the second controller application is active; and
enabling the automated passenger conveying device (101) to provide the service when the post-switchover inspection (352) of the second controller application determines that the automated passenger conveying device (101) works properly.

2. The method of claim 1, further comprises:
programming parameters to enable features corresponding to the second controller application when the second application is a new controller application for the component (109).

3. The method of any preceding claim, wherein the automated passenger conveying device (101) is an elevator, and wherein the post-switchover inspection (352) includes driving the elevator to a sequence of floors to determined safe operation.

4. The method of any preceding claim, further comprises:
reverting back to the first controller application when the post-switchover inspection (352) of the second controller application determines that the automated passenger conveying device (101) does not work properly.

5. The method of any preceding claim, further comprises:
sending to a network monitoring system (303) a message (354) indicating that the switchover (344) was completed when the post-switchover inspection (352) of the second controller application determines that the automated passenger conveying device (101) works properly.

6. The method of any preceding claim, further comprises:
sending to a notification to a user indicating that the switchover (344) was not completed when the post-switchover inspection (352) of the second controller application determines that the automated passenger conveying device (101) does not work properly.

7. The method of any preceding claim, wherein the automated passenger conveying device (101) is one of a plurality of automated passenger conveying devices within an automated passenger conveying system, each of the plurality of automated passenger conveying devices (101) comprising a corresponding component (109).

8. The method of any preceding claim, wherein the automated passenger conveying device (101) is an escalator or a walkway.

9. An automated passenger conveying system, comprising an automated passenger conveying device (101), the automated passenger conveying system configured to perform an automatic update of a first controller application in a component (109) of the automated passenger conveying device (101) by:
downloading a second controller application in response to a software compatibility check (312);
**characterised by**:
scheduling a switchover (344) in response to the downloading of the second controller application
disabling the automated passenger conveying device (101) from providing service;
performing the switchover (344) from the first controller application to the second controller application;
performing a post-switchover inspection (352) of the second controller application that determines whether the automated passenger conveying device works (101) properly while the second controller application is active;
enabling the automated passenger conveying device (101) to provide the service when the post-switchover inspection (352) of the second controller application determines that the automated passenger conveying device (101) works properly.

10. The system of claim 9, further comprises:
programming parameters to enable features corresponding to the second controller application when the second application is a new controller application for the component (109);

11. The system of claim 9 or 10, wherein the automated passenger conveying device (101) is an elevator, and the post-switchover inspection (344) includes driving the elevator to a sequence of floors to determined safe operation.

12. The system of claim 9, 10 or 11, further comprises:
reverting back to the first controller application when the post-switchover inspection of the second controller application determines that the automated passenger conveying device does not work properly.

13. The system of claim 9, 10, 11 or 12, further comprises:
sending to a network monitoring system a message indicating that the switchover was completed when the post-switchover inspection of the second controller application determines that the automated passenger conveying device works properly.

## Patentansprüche

1. Verfahren zum automatischen Aktualisieren einer ersten Steuergeräteanwendung in einer Komponente (109) einer automatisierten Personenbeförderungsvorrichtung (101), das Folgendes umfasst:
Herunterladen einer zweiten Steuergerätanwendung als Reaktion auf eine Software-Kompatibilitätsprüfung (312);
**gekennzeichnet durch**:
Planen einer Umschaltung (344) als Reaktion auf das Herunterladen einer zweiten Steuergerätanwendung.
Ausschalten des Bereitstellens des Diensts durch die automatisierte Personenbeförderungsvorrichtung (101);
Durchführen der Umschaltung (344) von der ersten Steuergerätanwendung zu der zweiten Steuergerätanwendung;
Durchführen einer Inspektion (352) nach dem Umschalten der zweiten Steuergerätanwendung, die bestimmt, ob die automatisierte Personenbeförderungsvorrichtung (101) richtig arbeitet, während die zweite Steuergerätanwendung aktiv ist; und
Einschalten der automatisierten Personenbeförderungsvorrichtung (101) dazu, den Dienst bereitzustellen, wenn die Inspektion (352) nach dem Umschalten der zweiten Steuergerätanwendung bestimmt, dass die automatisierte Personenbeförderungsvorrichtung (101) richtig arbeitet.

2. Verfahren nach Anspruch 1, das ferner Folgendes umfasst:
Programmieren von Parametern, um Merkmale einzuschalten, die der zweiten Steuergerätanwendung entsprechen, wenn die zweite Anwendung eine neue Steuergerätanwendung für die Komponente (109) ist.

3. Verfahren nach einem der vorhergehenden Ansprüche, wobei die automatisierte Personenbeförderungsvorrichtung (101) ein Aufzug ist und wobei die Inspektion (352) nach dem Umschalten ein Fahren des Aufzugs zu einer Sequenz von Stockwerken mit einem bestimmten sicheren Betrieb beinhaltet.

4. Verfahren nach einem der vorhergehenden Ansprüche, das ferner Folgendes umfasst:
Zurückkehren zu der ersten Steuergerätanwendung, wenn die Inspektion (352) nach dem Umschalten der zweiten Steuergerätanwendung bestimmt, dass die automatisierte Personenbeförderungsvorrichtung (101) nicht richtig arbeitet.

5. Verfahren nach einem der vorhergehenden Ansprüche, das ferner Folgendes umfasst:
Senden einer Nachricht (354) an ein Netzwerküberwachungssystem (303), die angibt, dass das Umschalten (344) fertiggestellt wurde, wenn die Inspektion (352) nach dem Umschalten der zweiten Steuergerätanwendung bestimmt, dass die automatisierte Personenbeförderungsvorrichtung (101) richtig arbeitet.

6. Verfahren nach einem der vorhergehenden Ansprüche, das ferner Folgendes umfasst:
Senden einer Benachrichtigung an einen Benutzer, der angibt, dass das Umschalten (344) nicht fertiggestellt wurde, wenn die Inspektion (352) nach dem Umschalten der zweiten Steuergerätanwendung bestimmt, dass die automatisierte Personenbeförderungsvorrichtung (101) nicht richtig arbeitet.

7. Verfahren nach einem der vorhergehenden Ansprüche, wobei die automatisierte Personenbeförderungsvorrichtung (101) eine von einer Vielzahl von automatisierten Personenbeförderungsvorrichtungen innerhalb eines automatisierten Personenbeförderungssystems ist, wobei jede der Vielzahl von automatisierten Personenbeförderungsvorrichtungen (101) eine entsprechende Komponente (109) umfasst.

8. Verfahren nach einem der vorhergehenden Ansprüche, wobei die automatisierte Personenbeförderungsvorrichtung (101) eine Rolltreppe oder ein Fahrsteig ist.

9. Automatisiertes Personenbeförderungssystem, das eine automatisierte Personenbeförderungsvorrichtung (101) umfasst, wobei das automatisierte Personenbeförderungssystem dazu konfiguriert ist, eine automatische Aktualisierung einer ersten Steuergerätanwendung in einer Komponente (109) der automatisierten Personenbeförderungsvorrichtung (101) durch Folgendes durchzuführen:
Herunterladen einer zweiten Steuergerätanwendung als Reaktion auf eine Software-Kompatibilitätsprüfung (312);
**gekennzeichnet durch**:
Planen einer Umschaltung (344) als Reaktion auf das Herunterladen der zweiten Steuergerätanwendung Ausschalten des Bereitstellens des Diensts durch die automatisierte Personenbeförderungsvorrichtung (101);
Durchführen der Umschaltung (344) von der ersten Steuergerätanwendung zu der zweiten Steuergerätanwendung;
Durchführen einer Inspektion (352) nach dem Umschalten der zweiten Steuergerätanwendung, die bestimmt, ob die automatisierte Personenbeförderungsvorrichtung richtig arbeitet (101), während die zweite Steuergerätanwendung aktiv ist;
Einschalten der automatisierten Personenbeförderungsvorrichtung (101) dazu, den Dienst bereitzustellen, wenn die Inspektion (352) nach dem Umschalten der zweiten Steuergerätanwendung bestimmt, dass die automatisierte Personenbeförderungsvorrichtung (101) richtig arbeitet.

10. System nach Anspruch 9, das ferner Folgendes umfasst:
Programmieren von Parametern, um Merkmale einzuschalten, die der zweiten Steuergerätanwendung entsprechen, wenn die zweite Anwendung eine neue Steuergerätanwendung für die Komponente (109) ist;

11. System nach Anspruch 9 oder 10, wobei die automatisierte Personenbeförderungsvorrichtung (101) ein Aufzug ist und die Inspektion nach dem Umschalten (344) ein Fahren des Aufzugs zu einer Sequenz von Stockwerken mit bestimmtem sicheren Betrieb beinhaltet.

12. System nach Anspruch 9, 10 oder 11, das ferner Folgendes umfasst:
Zurückkehren zu der ersten Steuergerätanwendung, wenn die Inspektion nach dem Umschalten der zweiten Steuergerätanwendung bestimmt, dass die automatisierte Personenbeförderungsvorrichtung nicht richtig arbeitet.

13. System nach Anspruch 9, 10, 11 oder 12, das ferner Folgendes umfasst:
Senden einer Nachricht an ein Netzwerküberwachungssystem, die angibt, dass die Umschaltung fertiggestellt wurde, wenn die Inspektion nach dem Umschalten der zweiten Steuergerätanwendung bestimmt, dass die automatisierte Personenbeförderungsvorrichtung richtig arbeitet.

## Revendications

1. Procédé de mise à jour automatique d'une première application de dispositif de commande dans un composant (109) d'un dispositif automatisé de transport de passagers (101), comprenant :
le téléchargement d'une seconde application de dispositif de commande en réponse à une vérification de compatibilité logicielle (312) ;
**caractérisé par** :
la programmation d'un basculement (344) en réponse au téléchargement de la seconde application de dispositif de commande ;
le fait d'empêcher le dispositif automatisé de transport de passagers (101) de fournir un service ;
la réalisation du basculement (344) de la première application de dispositif de commande à la seconde application de dispositif de commande ;
la réalisation d'une inspection post-basculement (352) de la seconde application de dispositif de commande qui détermine si le dispositif automatisé de transport de passagers (101) fonctionne correctement pendant que la seconde application de dispositif de commande est active ; et
le fait de permettre au dispositif automatisé de transport de passagers (101) de fournir le service lorsque l'inspection post-basculement (352) de la seconde application de dispositif de commande détermine que le dispositif automatisé de transport de passagers (101) fonctionne correctement.

2. Procédé selon la revendication 1, comprenant en outre :
des paramètres de programmation pour activer les caractéristiques correspondant à la seconde application de dispositif de commande lorsque la seconde application est une nouvelle application de dispositif de commande pour le composant (109).

3. Procédé selon une quelconque revendication précédente, dans lequel le dispositif automatisé de transport de passagers (101) est un ascenseur, et dans lequel l'inspection post-basculement (352) comprend l'entraînement de l'ascenseur vers une séquence d'étages pour un fonctionnement sécurisé déterminé.

4. Procédé selon une quelconque revendication précédente, comprenant en outre :
le retour à la première application de dispositif de commande lorsque l'inspection post-basculement (352) de la seconde application de dispositif de commande détermine que le dispositif automatisé de transport de passagers (101) ne fonctionne pas correctement.

5. Procédé selon une quelconque revendication précédente, comprenant en outre :
l'envoi à un système de surveillance de réseau (303) d'un message (354) indiquant que le basculement (344) a été achevé lorsque l'inspection post-basculement (352) de la seconde application de dispositif de commande détermine que le dispositif automatisé de transport de passagers (101) fonctionne correctement.

6. Procédé selon une quelconque revendication précédente, comprenant en outre :
l'envoi d'une notification à un utilisateur indiquant que le basculement (344) n'a pas été achevé lorsque l'inspection post-basculement (352) de la seconde application de dispositif de commande détermine que le dispositif automatisé de transport de passagers (101) ne fonctionne pas correctement.

7. Procédé selon une quelconque revendication précédente, dans lequel le dispositif automatisé de transport de passagers (101) est l'un d'une pluralité de dispositifs automatisés de transport de passagers à l'intérieur d'un système automatisé de transport de passagers, chacun de la pluralité de dispositifs automatisés de transport de passagers (101) comprenant un composant correspondant (109).

8. Procédé selon une quelconque revendication précédente, dans lequel le dispositif automatisé de transport de passagers (101) est un escalier roulant ou une passerelle.

9. Système automatisé de transport de passagers, comprenant un dispositif automatisé de transport de passagers (101), le système automatisé de transport de passagers étant configuré pour effectuer une mise à jour automatique d'une première application de dispositif de commande dans un composant (109) du dispositif automatisé de transport de passagers (101) par :
le téléchargement d'une seconde application de dispositif de commande en réponse à une vérification de compatibilité logicielle (312) ;
**caractérisé par** :
la programmation d'un basculement (344) en réponse au téléchargement de la seconde application de dispositif de commande ;
le fait d'empêcher le dispositif automatisé de transport de passagers (101) de fournir un service ;
la réalisation du basculement (344) de la première application de dispositif de commande à la seconde application de dispositif de commande ;
la réalisation d'une inspection post-basculement (352) de la seconde application de dispositif de commande qui détermine si le dispositif automatisé de transport de passagers fonctionne correctement (101) pendant que la seconde application de dispositif de commande est active ;
le fait de permettre au dispositif automatisé de transport de passagers (101) de fournir le service lorsque l'inspection post-basculement (352) de la seconde application de dispositif de commande détermine que le dispositif automatisé de transport de passagers (101) fonctionne correctement.

10. Système selon la revendication 9, comprenant en outre :
des paramètres de programmation pour activer les caractéristiques correspondant à la seconde application de dispositif de commande lorsque la seconde application est une nouvelle application de dispositif de commande pour le composant (109).

11. Système selon la revendication 9 ou 10, dans lequel le dispositif automatisé de transport de passagers (101) est un ascenseur, et l'inspection post-basculement (344) comprend l'entraînement de l'ascenseur vers une séquence d'étages pour un fonctionnement sécurisé déterminé.

12. Système selon la revendication 9, 10 ou 11, comprenant en outre :
le retour à la première application de dispositif de commande lorsque l'inspection post-basculement de la seconde application de dispositif de commande détermine que le dispositif automatisé de transport de passagers ne fonctionne pas correctement.

13. Système selon la revendication 9, 10, 11 ou 12, comprenant en outre :
l'envoi à un système de surveillance de réseau d'un message indiquant que le basculement a été achevé lorsque l'inspection post-basculement de la seconde application de dispositif de commande détermine que le dispositif automatisé de transport de passagers fonctionne correctement.
